# EUROPÄISCHE PATENTANMELDUNG

(11) **EP 1 124 369 A2**
(43) Veröffentlichungstag der Anmeldung: **16.08.2001**
(21) Anmeldenummer: 00250434.8
(22) Anmeldetag: 13.12.2000
(51) Int. Cl.: H04M 15/00

(54) **Verfahren zum Herstellen und Abrechnen einer Telekommunikationsverbindung**

(30) Priorität: 28.01.2000 DE 1004742
(71) Anmelder: SIEMENS AKTIENGESELLSCHAFT, 80333 München (DE)
(72) Erfinder: Lilge, Manfred, 14195 Berlin (DE)

(57) **Zusammenfassung**

Die Erfindung betrifft ein Verfahren zum Herstellen und gebührenbezogenen Abrechnen einer Telekommunikationsverbindung von einem Telekommunikationsanschluß (1) eines Kommunikationsnetzes zu einem Ziel-Telekommunikationsanschluß (2), bei dem die Telekommunikationsverbindung zu einem Vorzugs-Gebührentarif abgerechnet wird, wenn der Ziel-Telekommunikationsanschluß (2) zu einer zuvor getroffenen Auswahl an Ziel-Telekommunikationsanschlüssen gehört und die Telekommunikationsverbindung zu einem gegenüber dem Vorzugs-Gebührentarif teureren Gebührentarif abgerechnet wird, wenn der Ziel-Telekommunikationsanschluß (2) nicht zu der Auswahl gehört.
Um ein flexibles und leicht an veränderte Bedingungen anpaßbares Verfahren zu erhalten, wird das Herstellen der Telekommunikationsverbindung von einem Intelligenten Netz (IN) gesteuert und werden zum gebührenbezogenen Abrechnen benötigte Informationen durch das Intelligente Netz bereitgestellt.

## Beschreibung

Die Erfindung betrifft ein Verfahren zum Herstellen und gebührenbezogenen Abrechnen einer Telekommunikationsverbindung von einem Telekommunikationsanschluß eines Kommunikationsnetzes zu einem Ziel-Telekommunikationsanschluß, bei dem die Telekommunikationsverbindung zu einem Vorzugs-Gebührentarif abgerechnet wird, wenn der Ziel-Telekommunikationsanschluß zu einer zuvor getroffenen Auswahl an Ziel-Telekommunikationsanschlüssen gehört und die Telekommunikationsverbindung zu einem gegenüber dem Vorzugs-Gebührentarif teureren Gebührentarif abgerechnet wird, wenn der Ziel-Telekommunikationsanschluß nicht zu der Auswahl gehört.

Ein derartiges Verfahren ist in dem Faltblatt "Neu: Supergünstig ins Festnetz - Die neuen E-Plus Tarife City und Partner & Family" der Fa. E-Plus Service GmbH Potsdam vom Sept. 1998 im Abschnitt "Der Partner & Family Tarif: 5 Nummern - bis zu 67 % pro Min. sparen" beschrieben. Dabei kann eine Auswahl von 5 Ziel-Telekommunikationsanschlüssen bestehen, zu denen zu einem Verzugs-Gebührentarif telefoniert werden kann.

Der generell schnellebige Telekommunikationsmarkt ist durch häufige Veränderungen gekennzeichnet. Daher liegt der Erfindung die Aufgabe zugrunde, ein flexibles und leicht an veränderte Bedingungen anpaßbares Verfahren anzugeben, mit dem Telekommunikationsverbindungen der eingangs beschriebenen Art hergestellt und gebührenbezogen abgerechnet werden können.

Diese Aufgabe wird erfindungsgemäß dadurch gelöst, daß das Herstellen der Telekommunikationsverbindung von einem Intelligenten Netz (IN) gesteuert wird und zum gebührenbezogenen Abrechnen benötigte Informationen durch das Intelligente Netz bereitgestellt werden.

Ein Intelligentes Netz enthält typischerweise einen intelligenten Knoten, welcher die Abläufe in diesem Netz überwacht und steuert. Durch Veränderung dieses intelligenten Knotens (z. B. Veränderung der Software eines in dem intelligenten Knoten vorhandenen Rechners) ist es auf einfache Art und Weise möglich, das Intelligente Netz zu modifizieren und damit das erfindungsgemäße Verfahren, welches durch das Intelligente Netz gesteuert wird, in weiten Grenzen zu verändern. Darüber hinaus ist es möglich, das erfindungsgemäße Verfahren zu kombinieren mit anderen Telekommunikationsnetze betreffende Verfahren, welche von Intelligenten Netzen gesteuert werden. Damit ist es beispielsweise möglich, das erfindungsgemäße Verfahren zum Herstellen und gebührenbezogenen Abrechnen einer Kommunikationsverbindung mit einem sog. Prepaid-Verfahren zu kombinieren, welches weiter unten erläutert wird.

Bei dem erfindungsgemäßen Verfahren kann aus einem dem Intelligenten Netz zugeordneten Datenspeicher abgefragt werden, ob der Ziel-Telekommunikationsanschluß zu der Auswahl an Ziel-Telekommunikationsanschlüssen gehört.

Bei dem erfindungsgemäßen Verfahren können vorteilhafterweise die zur Gebührenabrechnung notwendigen Informationen durch das Intelligente Netz erfaßt und nach Beendigung der Telekommunikationsverbindung an eine zur Gebührenabrechnung im Kommunikationsnetz vorhandene Abrechnungseinheit weiterleitet werden.

Diese Ausgestaltungsform des erfindungsgemäßen Verfahrens ermöglicht es, das Abrechnen der Gebühren jeweils nach dem Ende der Telekommunikationsverbindung vorzunehmen und am Ende eines bestimmten Zeitraumes (z. B. am Monatsende) eine Gesamtabrechnung aller in diesem Zeitraum angefallenen Gebühren vorzunehmen. Dies ermöglicht die traditionelle Art der Gebührenabrechnung, bei der jeweils am Ende des Zeitraumes z. B. eine Rechnung über die angefallenen Gebühren erstellt wird.

In einer weiteren Ausführungsform des Verfahrens kann zur Gebührenabrechnung ein vorausbezahltes Gebührenguthaben durch das Intelligente Netz (IN) um einen sich aus der Dauer der Telekommunikationsverbindung und dem Vorzugs-Gebührentarif oder dem gegenüber dem Vorzugs-Gebührentarif teureren Gebührentarif ergebenden Betrag vermindert werden. Durch diese Art der Gebührenerfassung kann das erfindungsgemäße Verfahren beispielsweise mit einem an sich bekannten Prepaid-Verfahren kombiniert werden. Bei einem Prepaid-Verfahren kann ein Nutzer eines Telekommunikationsanschlusses nur solange Kommunikationsverbindungen herstellen, bis ein ihm zugeordnetes Gebührenguthaben aufgebraucht ist. Das Prinzip eines derartigen Prepaid-Verfahrens ist beispielsweise beschrieben unter dem Stichwort "Gebührenvorauszahlung (Pre-paid Service)" auf S. 3-63 des Buches "Handbuch für die Telekommunikation", Hrsg. Dr. V. Jung, Prof. H.-J. Warnecke; erschienen 1998 im Springer-Verlag Berlin, Heidelberg.

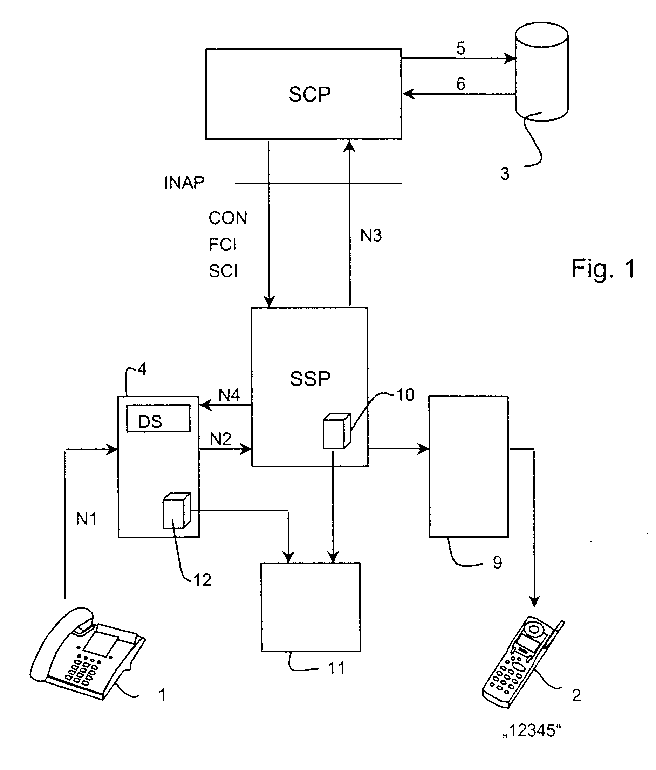

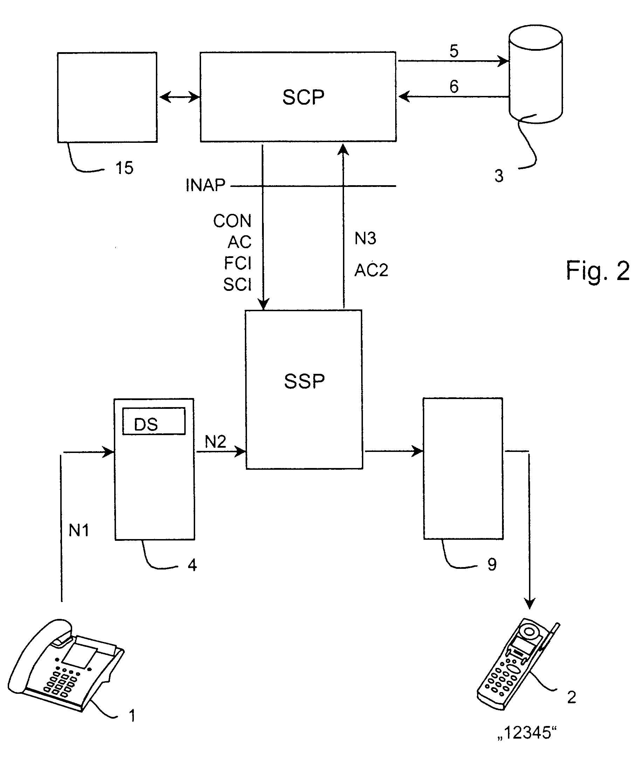

Zur weiteren Erläuterung der Erfindung ist in
Figur 1 ein Ausführungsbeispiel eines Kommunikationsnetzes zur Durchführung des erfindungsgemäßen Verfahrens und in Figur 2 ein weiteres Ausführungsbeispiel eines Kommunikationsnetzes zur Durchführung des erfindungsgemäßen Verfahrens dargestellt.

Im folgenden wird das erfindungsgemäßen Verfahren am Beispiel eines Intelligenten Netzes (IN) dargestellt, wie es z. B. in dem Buch "Technik der Netze" von Gerd Siegmund, 4. neubearbeitete und erweiterte Auflage, 1999, erschienen im Hüthig Verlag Heidelberg in Kap. 6.4 beschrieben ist. Derartige Intelligente Netze verfügen allgemein insbesondere über mindestens einen Dienstevermittlungspunkt (Service Switching Point, SSP) und einen Dienstesteuerpunkt (Service Control Point, SCP).

Von einem in Figur 1 dargestellten Telekommunikationsanschluß 1 eines Festnetzes soll eine Telekommunikationsverbindung zu einem Ziel-Telekommunikationsanschluß 2 eines Mobilfunknetzes oder eines Festnetzes aufgebaut werden. Der Ziel-Telekommunikationsanschluß 2 besitzt z.B. eine Telekommunikationsadresse "12345". Der Telekommunikationsanschluß 1 ist in dem Intelligenten Netz zur Teilnahme an dem Verfahren angemeldet. Daher ist in einem Datenspeicher 3 des Intelligenten Netzes eine dem Telekommunikationsanschluß 1 zugeordnete Auswahl an Ziel-Telekommunikationsanschlüssen abgespeichert. Zu dieser Auswahl gehört auch der Ziel-Telekommunikationsanschluß 2 mit der Telekommunikationsadresse "12345".

Am Anfang des Herstellens der Telekommunikationsverbindung wird eine Nachricht N1 von dem Telekommunikationsanschluß 1 zu einer Vermittlungsstelle 4 gesendet. In einem in der Vermittlungsstelle 4 enthaltenen Datensatz DS ist die Information enthalten, daß der Telekommunikationsanschluß 1 in dem Intelligenten Netz zur Teilnahme an dem Verfahren angemeldet ist. Daher wird von der Vermittlungsstelle 4 eine Nachricht N2 an einen Dienstevermittlungspunkt SSP des Intelligenten Netzes IN gesendet. Der Dienstevermittlungspunkt SSP sendet daraufhin eine Nachricht N3 an einen Dienstesteuerpunkt SCP. Diese Nachricht 3 erhält eine Telekommunikationsadresse des Telekommunikationsanschlusses 1 und die Telekommunikationsadresse "12345" des Ziel-Telekommunikationsschlusses 2. Als Nachricht N3 kann z. B. die Nachricht IDP (InitialDetection-Point) gesendet werden. Der Dienstesteuerpunkt SCP fragt nun mit Hilfe einer Abfragenachricht 5 vom Datenspeicher 3 die Information ab, ob der Ziel-Telekommunikationsanschluß 2 mit der Telekommunikationsadresse "12345" zu der zum Telekommunikationsanschluß 1 gehörenden Auswahl an Zieltelekommunikationsanschlüssen gehört. Der Datenspeicher 3 sendet eine Antwortnachricht 6 an den Dienstesteuerpunkt SCP zurück und teilt diesem mit, daß der Ziel-Telekommunikationsanschluß 2 zu der dem Telekommunikationsanschluß 1 zugeordneten Auswahl gehört. Der Dienstesteuerpunkt SCP sendet daraufhin eine Verbindungsnachricht CON und eine Vergebührungsnachricht FCI an den Dienstevermittlungspunkt SSP.

Bei der Nachricht IDP (InitialDetectionPoint), der Verbindungsnachricht CON (Connect) und der Vergebührungsnachricht FCI (FurnishChargingInformation) handelt es sich ebenso wie bei später erwähnten Nachrichten SCI (SendChargingInformation) und AC (ApplyCharging) um Nachrichten bzw. Operationen, die im Rahmen des sog. Intelligent Network Application Protokoll (INAP) definiert und beispielsweise in der Druckschrift Intelligent Network (IN);
Intelligent Network Capability Set 1 (CS1);
Core Intelligent Network Application Protocol (INAP);
Part 1: Protocol specification, Nr. ETS 300374-1 (September 1994) des European Telecommunications Standards Institute ETSI beschrieben sind.

Aufgrund der Verbindungsnachricht CON wird von dem Dienstevermittlungspunkt SSP die Telekommunikationsverbindung zwischen dem Telekommunikationsanschluß 1 und dem Ziel-Telekommunikationsanschluß 2 über eine weitere Vermittlungsstelle 9 hergestellt. Aufgrund der Vergebührungsnachricht FCI werden im Dienstevermittlungspunkt die für die Abrechnung der Gebühren benötigten Informationen über den Beginn und die Art der Telekommunikationsverbindung in einer Vergebührungsquittung 10 (einem sog. Gebühren-Ticket) abgelegt. Bei Beendigung der Telekommunikationsverbindung werden auch die Informationen über das Ende dieser Telekommunikationsverbindung in der Vergebührungsquittung 10 abgelegt; die Vergebührungsquittung 10 wird danach an eine Abrechnungseinheit 11 des Telekommunikationsnetzes übermittelt.

Als Alternative zur Vergebührungsnachricht FCI kann von dem Dienstesteuerpunkt SCP auch die oben erwähnte Gebührennachricht SCI an den Dienstevermittlungspunkt SSP gesendet werden. In diesem Fall schickt der Dienstevermittlungspunkt SSP eine Nachricht N4 an die Vermittlungsstelle 4, woraufhin diese eine Gebührenquittung 12 erstellt und nach Beendigung der Telekommunikationsverbindung an die Abrechnungseinheit 11 übermittelt. Von der Abrechnungseinheit 11 wird später eine Rechnung erstellt, bei der für die beschriebene Telekommunikationsverbindung aufgrund der in der Vorgebührungsquittung 10 oder der Gebührenquittung 12 enthaltenen Information ein Vorzugs-Gebührentarif angewandt wird.

Die bisher beschriebenen Abläufe zur Abrechnung der Gebühren gehören zu einer Art der Gebührenabrechnung, die auch als "Postprocessing" bezeichnet wird, da die Gebühren erst nach Beendigung der Telekommunikationsverbindung in Rechnung gestellt werden.

In Figur 2 ist eine weitere Möglichkeit dargestellt, wie in dem erfindungsgemäßen Verfahren die Telekommunikationsgebühren abgerechnet werden können. Hierzu ist eine Gebührenabrechnungseinheit 15 mit dem Dienstesteuerpunkt SCP verbunden; in der Gebührenabrechnungseinheit 15 ist die Höhe eines dem Telekommunikationsanschluß 1 zugeordneten vorausbezahlten Gebührenguthabens gespeichert. Die Gebührenabrechnungseinheit 15 kann auch Teil des Dienstesteuerpunktes SCP oder gemeinsam mit dem Datenspeicher 3 realisiert sein. Das Verfahren zum Herstellen und zur gebührenbezogenen Abrechnen der Telekommunikationsverbindung findet in einem Kommunikationsnetz gemäß Figur 2 analog zu dem in Figur 1 beschriebenen Verfahren statt mit dem Unterschied, daß vor dem Senden der Verbindungsnachricht CON vom Dienstesteuerpunkt SCP aus der Gebührenabrechnungseinheit 15 die Höhe des Gebührenguthabens abgefragt wird und aufgrund des anzuwendenden Gebührentarifes (hier des Vorzugs-Gebührentarifes) die mit dem Gebührenguthaben maximal mögliche Telekommunikationsverbindungsdauer bestimmt wird. Diese maximal mögliche Telekommunikationsverbindungsdauer wird vom Dienstesteuerpunkt SCP mittels einer Tarifierungsnachricht AC (ApplyCharging) an den Dienstevermittlungspunkt SSP gesendet. Der Dienstevermittlungspunkt SSP ermittelt fortlaufend die tatsächliche Telekommunikationsverbindungsdauer, unterbricht bei einem Erreichen der maximal möglichen Telekommunikationsverbindungsdauer die Telekommunikationsverbindung und sendet nach dem Ende der Telekommunikationsverbindung die tatsächliche Telekommunikationsverbindungsdauer mittels einer zweiten Tarifierungsnachricht AC2 (ApplyCharging) an den Dienstesteuerpunkt SCP zurück. Dieser bestimmt aufgrund des anzuwendenden Gebührentarifes (hier des Vorzugs-Gebührentarifes) die entstandenen Telekommunikationsgebühren und vermindert die Höhe des dem Telekommunikationsanschluß 1 zugeordneten vorausbezahlten Gebührenguthabens entsprechend. Danach wird vom Dienstesteuerpunkt SCP mit dem Senden einer einen Gebührenbetrag Null enthaltenden Vergebührungsnachricht FCI oder Gebührennachricht SCI veranlaßt, daß die Telekommunikationsverbindung nicht noch einmal über eine Vergebührungsquittung 10 (vgl. Fig 1) oder eine Gebührenquittung 12 vergebührt wird.

Diese Art der Gebührenabrechnung wird auch als "Online-Charging" bezeichnet und ermöglicht es, das erfindungsgemäße Verfahren z. B. in Verbindung mit einem Prepaid-Verfahren einzusetzen. Das bisher beschriebene Verfahren kann auch dann angewandt werden, wenn der Telekommunikationsanschluß 1 zu einem Mobilfunknetz gehört. Dann kann bei Benutzung des CAMEL-Standards (Customized Application for Mobile Enhanced Network Logic) die Information, daß der Telekommunikationsanschluß 1 in dem Intelligenten Netz zur Teilnahme an dem Verfahren angemeldet ist, in einer Datensammlung O-CSI (Originating CAMEL Subscription Information) in einer Heimatdatei (Home Location Register, HLR) des Mobilfunknetzes gespeichert sein.

## Patentansprüche

1. Verfahren zum Herstellen und gebührenbezogenen Abrechnen einer Telekommunikationsverbindung von einem Telekommunikationsanschluß (1) eines Kommunikationsnetzes zu einem Ziel-Telekommunikationsanschluß (2), bei dem
- die Telekommunikationsverbindung zu einem Vorzugs-Gebührentarif abgerechnet wird, wenn der Ziel-Telekommunikationsanschluß (2) zu einer zuvor getroffenen Auswahl an Ziel-Telekommunikationsanschlüssen gehört und
- die Telekommunikationsverbindung zu einem gegenüber dem Vorzugs-Gebührentarif teureren Gebührentarif abgerechnet wird, wenn der Ziel-Telekommunikationsanschluß (2) nicht zu der Auswahl gehört,
**dadurch gekennzeichnet**, daß
- das Herstellen der Telekommunikationsverbindung von einem Intelligenten Netz (IN) gesteuert wird und
- zum gebührenbezogenen Abrechnen benötigte Informationen durch das Intelligente Netz (IN) bereitgestellt werden.

2. Verfahren nach Anspruch 1,
**dadurch gekennzeichnet**, daß
- aus einem dem Intelligenten Netz (IN) zugeordneten Datenspeicher (3) abgefragt wird, ob der Ziel-Telekommunikationsanschluß (2) zu der Auswahl an Ziel-Telekommunikationsanschüssen gehört.

3. Verfahren nach Anspruch 1 oder 2,
**dadurch gekennzeichnet**, daß
- die zur Gebührenabrechnung notwendigen Informationen durch das Intelligente Netz (IN) erfaßt und nach Beendigung der Telekommunikationsverbindung an eine zur Gebührenabrechnung im Kommunikationsnetz vorhandene Abrechnungseinheit (11) weiterleitet werden.

4. Verfahren nach Anspruch 1 oder 2,
**dadurch gekennzeichnet**, daß
- zur Gebührenabrechnung ein vorausbezahltes Gebührenguthaben durch das Intelligente Netz (IN) um einen sich aus der Dauer der Telekommunikationsverbindung und dem Vorzugs-Gebührentarif oder dem gegenüber dem Vorzugs-Gebührentarif teureren Gebührentarif ergebenden Betrag vermindert wird.
